# EUROPEAN PATENT APPLICATION

(11) **EP 1 787 908 A2**
(43) Date of publication of application: **23.05.2007**
(21) Application number: 06124333.3
(22) Date of filing: 17.11.2006
(51) Int. Cl.: B64D 13/04

(54) **Aircraft cabin pressure control system and method for aircraft having multiple differential pressure limits**

(30) Priority: 18.11.2005 US 283311
(71) Applicant: Honeywell International Inc., Morristown, NJ 07962 (US)
(72) Inventor: Laing, Alastair R., Tucson, AZ 85704 (US); Arthurs, Timothy R., Tucson, AZ 85742 (US)
(74) Representative: Haley, Stephen

(57) **Abstract**

A cabin pressure control system and method controls aircraft cabin pressure in aircraft having multiple cabin to at atmosphere differential pressure limits. The control system and method ensures that the cabin pressure is automatically controlled during typical in-flight operations, as well as during pressurized landing operations and/or pressurized take-off operations, without exceeding the different cabin-to-atmosphere differential pressure limits that may be associated with these different operations.

## Description

The present invention relates to aircraft cabin pressure control and, more particularly, to a system and method for controlling aircraft cabin pressure in aircraft having multiple cabin-to-atmosphere differential pressure limits.

For a given airspeed, an aircraft may consume less fuel at a higher altitude than it does at a lower altitude. In other words, an aircraft may be more efficient in flight at higher altitudes as compared to lower altitudes. Moreover, bad weather and turbulence can sometimes be avoided by flying above such weather or turbulence. Thus, because of these and other potential advantages, many aircraft are designed to fly at relatively high altitudes. The altitude to which an aircraft may fly is, in many instances, limited to a maximum certified altitude.

As the altitude of an aircraft increases, from its take-off altitude to its "top of climb" or "cruise" altitude, the ambient atmospheric pressure outside of the aircraft decreases. Thus, unless otherwise controlled, more air could leak out of the aircraft cabin than is being supplied by the air conditioning system (ACS) causing it to decompress to an undesirably low pressure at high altitudes. If the pressure in the aircraft cabin is too low, the aircraft passengers may suffer hypoxia, which is a deficiency of oxygen concentration in human tissue. The response to hypoxia may vary from person to person, but its effects generally include drowsiness, mental fatigue, headache, nausea, euphoria, and diminished mental capacity.

Aircraft cabin pressure is often referred to in terms of "cabin pressure altitude," which refers to the normal atmospheric pressure existing at a certain altitude. Studies have shown that the symptoms of hypoxia may become noticeable when the cabin pressure altitude is above the equivalent of the atmospheric pressure one would experience outside at 8,000 feet. Thus, many aircraft are equipped with cabin pressure control system functions to, among other things, maintain the cabin pressure altitude to within a relatively comfortable range (e.g., at or below approximately 8,000 feet), allow gradual changes in the cabin pressure altitude to minimize passenger discomfort, and maintain cabin-to-atmosphere differential pressure below nominal and maximum limits. Thus, many cabin pressure control systems control cabin altitude as a function of aircraft altitude, and do so in a manner and rate that will keep the cabin-to-atmosphere different pressure less than the nominal limit.

Typically, when the aircraft is on the ground the cabin pressure is approximately equalized with the airfield ambient pressure. However, the aircraft cabin may be pressurized during some operations on the ground. For example, the aircraft cabin may be pressurized during a take-off run or when the aircraft has landed. During these operations, the cabin pressure control system is typically configured to control cabin pressure to a pressure slightly greater than the airfield ambient pressure, to minimize cabin pressure transients and thereby improve passenger comfort.

Aircraft that are designed to land with a pressurized cabin may be required, by various certification authorities, to withstand the combination of mechanical loads associated with the landing and a maximum landing cabin-to-atmosphere differential pressure load. In some aircraft, the maximum landing cabin-to-atmosphere differential pressure differs from that of the maximum cabin-to-atmosphere differential pressure during flight. For such aircraft, a specific warning placard is typically installed in the cockpit to alert the flight crew to verify that the cabin-to-atmosphere differential pressure is within the maximum landing limit prior to landing,

Although the use of a placard is generally safe and reliable, it does suffer certain drawbacks. For example, the flight crew could input an incorrect landing field elevation to the flight management system (FMS) and/or omit or incorrectly verify the differential pressure check prior to landing. Though unlikely, such an event could result in the aircraft landing outside the allowable landing cabin-to-atmosphere differential pressure limit, which could overstress the fuselage, and result in potentially significant and costly overhaul/repair activity and/or reduced aircraft life.

Hence, there is a need for a cabin pressure control system and method that controls aircraft cabin pressure in aircraft having multiple cabin-to-atmosphere differential pressure limits, and thereby reduces the likelihood of overstressing the aircraft fuselage during landing, and/or causing potentially significant and costly overhaul/repair activity and/or reduced aircraft life. The present invention addresses one or more of these needs.

The present invention provides a cabin pressure control system and method that controls aircraft cabin pressure in aircraft having multiple cabin-to-atmosphere differential pressure limits.

In one embodiment, and by way of example only, a method of controlling aircraft cabin pressure in an aircraft having a plurality of cabin-to-atmosphere differential pressure limits includes determining a flight status of the aircraft, and selecting one of the plurality of cabin-to-atmosphere differential pressure limits as a maximum cabin-to-atmosphere differential pressure limit value based on the determined flight status. The cabin pressure is automatically controlled such that the cabin pressure does not exceed the maximum cabin-to-atmosphere differential pressure limit value.

In another exemplary embodiment, in an aircraft including an in-flight maximum cabin-to-atmosphere differential pressure limit when a flight status of the aircraft is an in-flight status, and a non-flight maximum cabin-to-atmosphere differential pressure limit when the flight status of the aircraft is a non-flight status, the in-flight maximum cabin-to-atmosphere differential pressure limit being greater than the non-flight cabin-to-atmosphere differential pressure limit, a method of controlling aircraft cabin pressure includes determining the flight status of the aircraft as being in the in-flight status or the non-flight status. Cabin pressure is automatically controlled such that the in-flight maximum cabin-to-atmosphcre differential pressure limit is not exceeded when the determined aircraft status is the in-flight status, and the non-flight maximum cabin-to-atmosphere differential pressure limit is not exceeded if the determined aircraft status is the non-flight status.

In another exemplary embodiment, an aircraft cabin pressure control system for an aircraft having a plurality of cabin-to-atmosphere differential pressure limits includes an outflow valve and a controller. The outflow valve is coupled to receive valve commands and is operable, in response thereto, to selectively move to a commanded position. The controller is adapted to receive at least a signal representative of aircraft flight status and is operable, in response thereto, to determine a flight status of the aircraft, select one of the plurality of cabin-to-atmosphere differential pressure limits as a maximum cabin-to-atmosphere differential pressure limit, and supply the valve commands to the outflow valve to selectively move the outflow to the commanded position to thereby control aircraft cabin pressure, such that the aircraft cabin pressure does not exceed at least the selected maximum cabin-to-atmosphere differential pressure limit.

Other independent features and advantages of the preferred cabin pressure control system and method will become apparent from the following detailed description, taken in conjunction with the accompanying drawings which illustrate, by way of example, the principles of the invention.

### In the Drawings;

FIG. 1 is a functional block diagram of a cabin pressure control system according to an embodiment of the present invention;

FIG. 2 is a flowchart of an exemplary embodiment of the control logic that may be implemented by the cabin pressure control system of FIG. 1; and

FIG. 3 is a simplified control logic functional block diagram that implements the control logic of FIG. 2.

The following detailed description of the invention is merely exemplary in nature and is not intended to limit the invention or the application and uses of the invention. Furthermore, there is no intention to be bound by any theory presented in the preceding background of the invention or the following detailed description of the invention.

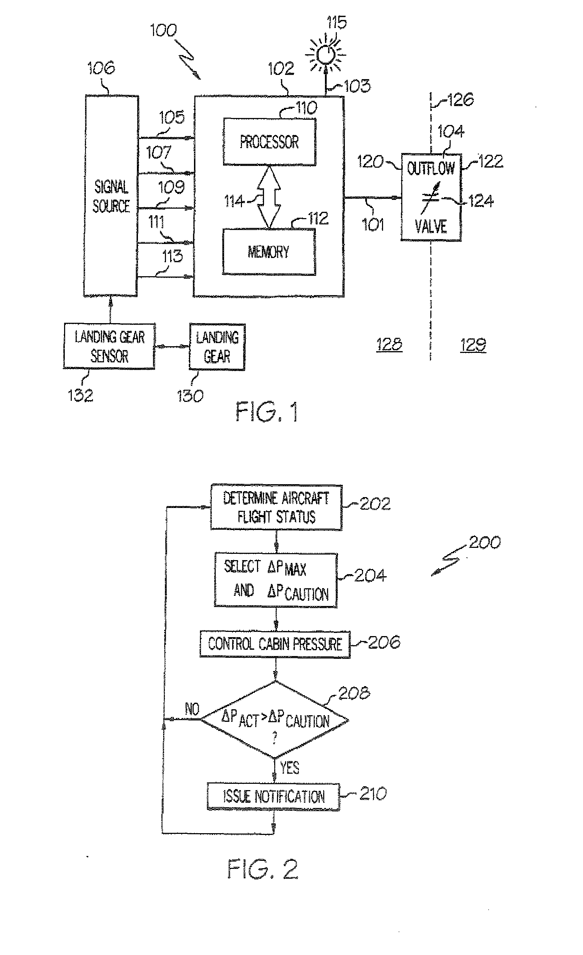

A cabin pressure control system according to an exemplary embodiment is illustrated in FIG. 1. The system 100 includes a controller 102 and an outflow valve 104. The controller 102 is adapted to receive various signals from various one or more signal sources 106. As will be described in more detail below, the controller 102 uses these signals to implement a control logic scheme, to thereby supply valve command signals 101 to the outflow valve 104 and selectively supply a notification signal 103. The position of the outflow valve 104 varies in response to the valve command signals 101 to thereby control aircraft cabin pressure and aircraft cabin pressure rate of change.

The specific signal sources 106, and the signals supplied therefrom, may vary depending, for example, on the particular type of control logic that the controller 102 is implementing. For example, the signal sources 106 may include the aircraft flight management system (FMS), the aircraft avionics equipment, and/or various sensors. In addition, it will be appreciated that one or more of the signal sources 106 may be included within the controller 102. No matter the specific sources of the signals, in the depicted embodiment, the supplied signals include at least one or more flight status signals 105 representative of, for example, whether the aircraft is in one of a plurality of predetermined flight statuses, one or more signals representative of the take-off altitude value 107 (e.g., the altitude from which the aircraft is taking off), one or more signals representative of the landing field altitude value 109 (e.g., the altitude of the aircraft Handing destination), one or more cabin pressure signals 111 representative of actual cabin pressure, and one or more ambient pressure signals 113 representative of actual ambient pressure outside of the aircraft.

Before proceeding further, it will be appreciated that the signals delineated above and depicted in FIG. 1 are merely exemplary and that various other signals may be supplied to the controller to implement the overall cabin pressure control functionality. For example, depending on the specific control logic being implemented, the controller 102 may additionally receive a signal representative of the aircraft's "top-of-climb" or cruise altitude, and/or a signal that is representative of a sensed cabin-to-atmosphere differential pressure.

Returning once again to the description, it is seen that the controller 102 includes at least a processor 110, and a memory circuit 112, which are preferably interconnected via a communication bus 114. Although the processor 110 and memory circuits 112 are depicted as separate functional blocks, it will be appreciated that these circuits could be physically implemented in a single integrated circuit, and/or may be fully or partially implemented in software, and/or be fully or partially implemented using discrete analog or digital components. The individual depiction of each circuit is provided solely for additional clarity and ease of description.

The processor 110 receives and processes the signals supplied to the controller 102 from the signal sources 106. In particular, the processor 110 receives at least the flight status signal 105, the take-off altitude value signal 107, the landing field altitude value signal 109, the cabin pressure signal 111, and the ambient pressure signal 113 from the signal source 106. The processor 110 also selects and processes data representative of one of a plurality of maximum cabin-to-atmosphere differential pressure limits (ΔP_{MAX}) and one of a plurality of cautionary cabin-to-atmosphere differential pressure limits (ΔP_{CAUTION}). These data may be supplied from the one or more signal sources 106, from an on-board memory (not illustrated), or from the memory circuit 112. In a particular preferred embodiment, these data are stored in, and supplied from, the memory circuit 112. It will be appreciated that the maximum (ΔP_{MAX}) and cautionary (ΔP_{CAUTION}) cabin-to-atmosphere differential pressure limits maybe equal or non-equal in magnitude depending, for example, on the particular aircraft. Moreover, as will be described in more detail further below, the particular maximum (ΔP_{MAX}) and cautionary (ΔP_{CAUTION}) cabin-to-atmosphere differential pressure limits that the processor 110 selects and processes are based, at least in part, on an aircraft flight status determined by the processor 110. As will also be described further below, the processor 110 determines the aircraft flight status in response to the flight status signal 105.

No matter the specific source of the above-described signals and data, the processor 110, implementing the above-mentioned control logic, processes the received signals and data, and supplies the valve command signals 101 to the outflow valve 104, and selectively supplies the notification signal 103 to a notification device 115. The control logic, which is preferably implemented in software and stored in the memory circuit 112, will be described in more detail below. It will be appreciated that the processor 110 is additionally configured to determine actual cabin-to-atmosphere differential pressure (ΔP_{ACTUAL}) from one or more of the received signals.

The valve command signals 101 may be supplied directly to the outflow valve 104 or via valve driver circuitry (not illustrated). It will be appreciated that the valve driver circuitry, if included, may be part of the controller 102 or incorporated into the outflow valve 104. It will additionally be appreciated that although the processor 110 and memory circuit 112 are depicted as separate units, the memory circuit 112 could be integral to the processor 110. The individual depiction of each is provided solely for additional clarity and ease of description.

Though not depicted, it will be appreciated that the controller could additionally include one or more signal conditioning circuits at either, or both, the input and the output of the controller 102. The signal conditioning circuits, if included, would function to, among other things, appropriately condition the signals received by each circuit. For example, if one or more of the signals supplied to the controller are analog signals, an input signal conditioning circuit would include analog-to-digital signal (A/D) conversion circuitry. Similarly, if the command signals 101 supplied to the outflow valve 104 need to be analog signals, an output signal conditioning circuit would include digital-to-analog (D/A) conversion. It will additionally be appreciated that the processor 110 could be configured with on-board signal processing circuitry.

The outflow valve 104 includes an inlet flow port 120, an outlet flow port 122, and a variable area flow orifice 124 located therebetween to regulate fluid flow. The outflow valve 104 is, for example, preferably mounted on an aircraft bulkhead 126 such that the inlet flow port 120 is exposed to the aircraft cabin 128 and the outlet flow port 122 is exposed to the atmosphere outside of the aircraft 129. Thus, during flight the pressure in the aircraft cabin 128, and the rate of change of aircraft cabin pressure, can be controlled by moving the outflow valve variable area flow orifice 124.

The controller 102, as was noted above, implements software control logic to supply the valve command signals 101 to the outflow valve 104, to thereby control aircraft cabin pressure and maintain aircraft cabin-to-atmosphere differential pressure below specified limits. An exemplary embodiment of at least a portion of this software control logic will be now described in more detail. In doing so, reference should be made to FIG. 2, which depicts an exemplary embodiment of the control logic in flowchart form. It should be appreciated that the parenthetical references in the following discussion correspond to the flowchart blocks shown in FIG. 2.

The processor 110, in implementing the control logic 200, determines the aircraft flight status (202). It will be appreciated that the cabin pressure control system 100, and the aircraft in which the system 100 is installed, may be configured to determine any one of numerous aircraft flight statuses. For example, the processor 110 could be configured to determine when the aircraft is in a taxi status, a take-off status, an ascent status, a cruise status, a descent status, a landing status, or a maneuvering status. In the preferred embodiment, however, the processor 110 is configured to determine only two aircraft statuses - an in-flight status and a non-flight status. As used herein, an aircraft is considered to be in a non-flight status whenever it is on the ground (whether idle, parked, or taxiing), during portions of the aircraft take-off maneuver, and during portions of the aircraft landing maneuver. Commensurate with this, an aircraft is considered to be in an in-flight condition for all other aircraft conditions.

The manner in which the processor 110 determines whether the aircraft is in an in-flight status or a non-flight status (202) may also vary. In the preferred embodiment, this determination is based on the status of one or more aircraft components. For example, the flight status determination could be based on the status of one or more flight control surfaces, or aircraft altitude signals, just to name a few. In the depicted embodiment, however, the flight status determination is based on the status of the aircraft landing gear 130 (see FIG. 1), which is sensed using, for example, a landing gear sensor 132 (see also FIG. 1). As is generally known, the aircraft landing gear 130 is movable between a stowed position and a deployed position, and thus has either a stowed status or a deployed status. The aircraft landing gear 130 is moved to the deployed position, and is thus in the deployed status, whenever the aircraft is on the ground, during portions of the aircraft take-off maneuver, and during portions of the aircraft landing maneuver. The aircraft landing gear 130 is preferably moved to the stowed position, and is thus in the stowed status, at all other times. Hence, whenever the landing gear 130 is in the deployed status, the processor 110 determines that the aircraft is in a non-flight status. Conversely, whenever the landing gear is in the stowed status, the processor determines that the aircraft is in an in-flight status. A particular physical configuration for providing the processor 110 with the landing gear status is described further below.

No matter the specific number of aircraft flight statuses that are determined, or the specific manner in which each aircraft flight status is determined, when the processor 110 determines the aircraft flight status, it then selects a maximum cabin-to-atmosphere limit value (ΔP_{MAX}) and a cautionary cabin-to-atmosphere differential pressure limit value (ΔP_{CAUTION}) associated with the determined flight status (204). Preferably, the system 100 is configured such that there are different maximum cabin-to-atmosphere limit values (ΔP_{MAX}) and different cautionary cabin-to-atmosphere differential pressure limit values (ΔP_{CAUTION}) associated with each flight status. It will thus be appreciated that the system 100, depending on the number of determined flight statuses, could similarly be configured to include any one of numerous maximum and cautionary cabin-to-atmosphere differential pressure limit values. However, as noted above, the system 100 is preferably configured to only determine whether the aircraft is in an in-flight status or a non-flight status. Thus, the processor 110, at least in the depicted embodiment, is configured to select either a maximum in-flight cabin-to-atmosphere differential pressure limit value (ΔP_{FLIGHT_MAX}) and a cautionary in-flight cabin-to-atmosphere differential pressure limit (ΔP_{FLIGHT_CAUTION}), or a maximum non-flight cabin-to-atmosphere differential pressure limit (ΔP_{NONFLIGHT_MAX}) and a cautionary non-flight cabin-to-atmosphere differential pressure limit (ΔP_{NON-FLIGHT_CAUTION}).

Upon selection of the maximum cabin-to-atmosphere differential pressure limit value (ΔP_{MAX}) and the cautionary cabin-to-atmosphere differential pressure limit value (ΔP_{CAUTION}), the processor 110 implements the cabin pressure control logic with these limit values (206). The cabin pressure control logic may be any one of numerous types of cabin pressure control logic including, but not limited to, adaptive control logic, reactive control logic, or fixed-rate control logic. No matter which specific control logic type is implemented, the cabin pressure control system 100 controls cabin pressure and cabin pressure rate of change, while maintaining the actual cabin-to-atmosphere differential pressure less than or equal to the selected maximum cabin-to-atmosphere differential pressure limit value.

While controlling cabin pressure, the processor 110 compares the actual cabin-to-atmosphere differential pressure (ΔP_{ACTUAL}) to the selected cautionary cabin-to-atmosphere differential pressure limit value (ΔP_{CAUTION}) (208). If this comparison (208) indicates that the actual cabin-to-atmosphere differential pressure (ΔP_{ACTUAL}) is below the selected cautionary cabin-to-atmosphere differential pressure limit value (ΔP_{CAUTION}), the processor 110 repeats the previously described process steps (202-206). If, however, this comparison (208) indicates that the actual cabin-to-atmosphere differential pressure (ΔP_{ACTUAL}) is exceeding the selected cautionary cabin-to-atmosphcre differential pressure limit value (ΔP_{CAUTION}), the processor 110 issues the notification signal 103 (210). The notification signal 103, as was mentioned above, is supplied to the notification device 115. The notification device 115 alerts the pilot that the selected cautionary cabin-to-atmosphere differential pressure limit value (ΔP_{CAUTION}) is being exceeded, so that the pilot can take corrective action before the selected maximum cabin-to-atmosphere limit value (ΔP_{MAX}) is reached or exceeded.

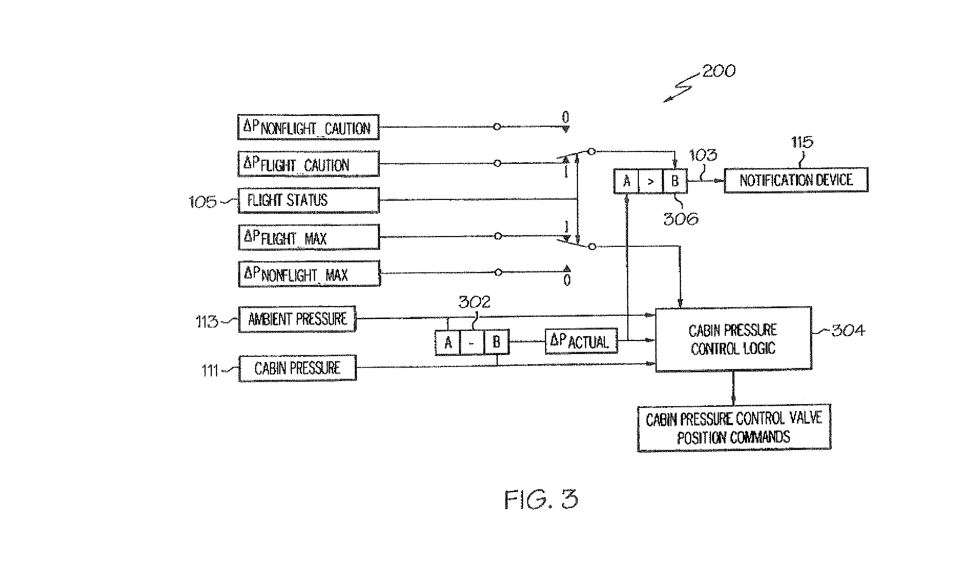

With reference to FIG. 3, an alternative representation of the control logic 200 is illustrated and will now be described. Before doing so, however, it is noted that the exemplary control logic 200 is depicted in FIG. 3 using various schematic symbols that represent physical components. It will be appreciated that this is done for clarity and ease of description, and that the control logic 200 could be implemented using one or more discrete physical components or it could be partially or fully implemented in software.

Turning now to the description of the control logic depicted in FIG. 3, it is seen that the control logic 200 receives at least the flight status signal 105, the cabin pressure signal 111, and the ambient pressure signal 113 from the signal sources 106. The cabin pressure signal 111 and the ambient pressure signal 113 are each supplied to a subtraction function 302 and to cabin pressure control logic 304. The subtraction function 302 calculates the mathematical difference between the cabin pressure signal 111 and the aircraft ambient signal 113 and supplies, to both the cabin pressure control logic 304 and a comparison function 306, a signal representative of the actual cabin-to-atmosphere differential pressure value (ΔP_{ACTUAL}).

The flight status signal 105, as was mentioned above, is representative of the flight status of the aircraft. As was also mentioned above, the flight status is determined to be either an in-flight status or a non-flight status based on the status of the aircraft landing gear 130. Thus, the flight status signal 105 is representative of the aircraft landing gear status. In the depicted embodiment, the flight status signal 105 is representative of a logical "1" value when the aircraft landing gear status is the stowed status, which corresponds to the aircraft being in the in-flight status. Conversely, the flight status signal 105 is representative of a logical "0" value when the aircraft landing gear status is the deployed status, which corresponds to the aircraft being in the non-flight status.

If the flight status signal 105 is representative of a logical "1," meaning the aircraft is in the in-flight status (e.g., landing gear stowed), the maximum in-flight cabin-to-atmosphere differential pressure limit value (ΔP_{FLIGHT_MAX}) is supplied to the cabin pressure control logic 304, and the cautionary in-flight cabin-to-atmosphere differential pressure limit (ΔP_{FLIGHT_CAUTION}) is supplied to the comparison function 306. Conversely, if the flight status signal 105 is representative of a logical "0," meaning the aircraft is in the non-flight status (e.g., landing gear deployed), the maximum non-flight cabin-to-atmosphere differential pressure limit value (ΔP_{NONFLIGHT_MAX}) is supplied to the cabin pressure control logic 304, and the cautionary non-flight cabin-to-atmosphere differential pressure limit (ΔP_{NONFLIGHT_CAUTION}) is supplied to the comparison function 306.

The cabin pressure control logic 304, as described above, processes the cabin pressure signal 111, the ambient pressure signal 113, the signal representative of the actual cabin-to-atmosphere differential pressure value (ΔP_{ACTUAL}), and the maximum cabin-to-atmosphere differential pressure limit value (ΔP_{FLIGHT_MAX} or ΔP_{NONFLIGHT_MAX}) and, in response, supplies the outflow valve commands 101 to the outflow valve 104. The comparison function 306 compares the actual cabin-to-atmosphere differential pressure value (ΔP_{ACTUAL}) to the selected cautionary cabin-to-atmosphere differential pressure limit (ΔP_{FLIGHT_CAUTION} or ΔP_{NONFLIGHT_CAUTION}). If the actual cabin-to-atmosphere differential pressure value (ΔP_{ACTUAL}) exceeds the selected cautionary cabin-to-atmosphere differential pressure limit (ΔP_{FLIGHT_CAUTION} or ΔP_{NONFLIGHT_CAUTION}), the comparison function issues the notification signal 103 to the notification device 115.

The cabin pressure control system and method described herein controls aircraft cabin pressure in aircraft having multiple cabin-to-atmosphere differential pressure limits. As such, the control system and method ensures that the cabin pressure is automatically controlled during typical in-flight operations, as well as during pressurized landing operations and/or pressurized take-off operations, without exceeding the different cabin-to-atmosphere differential pressure limits that may be associated with these different operations.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of controlling aircraft cabin pressure in an aircraft having a plurality of cabin-to-atmosphere differential pressure limits, comprising the steps of:
determining a flight status of the aircraft (202);
selecting one of the plurality of cabin-to-atmosphere differential pressure limits as a maximum cabin-to-atmosphere differential pressure limit value, based on the determined flight status (204); and
automatically controlling cabin pressure such that the cabin pressure does not exceed the maximum cabin-to-atmosphere differential pressure limit value (206).

2. The method of Claim 1, wherein:
the determined aircraft flight status is one of either an in-flight status or a non-flight status;
the plurality of cabin-to-atmosphere differential pressure limits includes an in-flight maximum cabin-to-atmosphere differential pressure limit and a non-flight maximum cabin-to-atmosphere differential pressure limit, the in-flight maximum cabin-to-atmosphere differential pressure limit differing from the non-flight cabin-to-atmosphere differential pressure;
the in-flight maximum cabin-to-aimosphere differential pressure limit is selected when the determined aircraft flight status is the in-flight status; and
the non-flight maximum cabin-to-atmosphere differential pressure limit is selected when the flight status of the aircraft is a non-flight status.

3. The method of Claim 1, wherein the step of determining the flight status of the aircraft comprises determining a status of one or more aircraft components.

4. The method of Claim 3, wherein the one or more aircraft components comprises aircraft landing gear (130).

5. The method of Claim 4, wherein:
the aircraft landing gear (130) has at least a deployed status and a stowed status;
the aircraft is determined to be in an in-flight status when the landing gear status is the stowed status; and
the aircraft is determined to be in a non-flight status when the landing gear status is the deployed status.

6. The method of Claim 1, further comprising:
selecting one of the plurality of cabin-to-atmosphere differential pressure limits as a cautionary cabin-to-atmosphere differential pressure limit value, based on the determined aircraft flight status.

7. The method of Claim 6, further comprising:
determining an actual cabin-to-atmosphere differential pressure value;
comparing the actual cabin-to-atmosphere differential pressure value to the cautionary cabin-to-atmosphere differential pressure limit value (208); and
issuing a notification if the actual cabin-to-atmosphere differential pressure exceeds the cautionary cabin-to-atmosphere differential pressure limit (210).

8. The method of Claim 6, wherein:
determining actual cabin-to-atmosphere differential pressure;
comparing the actual cabin-to-atmosphere differential pressure to the non-flight cautionary cabin-to-atmosphere differential pressure limit if the determined aircraft status is the non-flight status (208); and
issuing a notification if the actual cabin-to-atmosphere differential pressure exceeds the non-flight cautionary cabin-to-atmosphere differential pressure limit (210).

9. An aircraft cabin pressure control system for an aircraft having a plurality of cabin-to-atmosphere differential pressure limits, comprising
an outflow valve (104) coupled to receive valve commands and operable, in response thereto, to selectively move to a commanded position; and
a controller (102) adapted to receive at least a signal representative of aircraft flight status and operable, in response thereto, to:
(i) determine a flight status of the aircraft,
(ii) select one of the plurality of cabin-to-atmosphere differential pressure limits as a maximum cabin-to-atmosphere differential pressure limit, and
(iii) supply the valve commands to the outflow valve (104) to selectively move the outflow to the commanded position to thereby control aircraft cabin pressure, such that the aircraft cabin pressure does not exceed at least the selected maximum cabin-to-atmosphere differential pressure limit.

10. The system of Claim 9, wherein:
the flight status of the aircraft is one of either an in-flight status or a non-flight status;
the plurality of cabin-to-atmosphere differential pressure limits includes an in-flight maximum cabin-to-atmosphere differential pressure limit and a non-flight maximum cabin-to-atmosphere differential pressure limit, the in-flight maximum cabin-to-atmosphere differential pressure limit differing from the non-flight cabin-to-atmosphere differential pressure; and
the valve command signals selectively move the outflow to the commanded position to thereby control aircraft cabin pressure, such that at least:
(i) the in-flight maximum cabin-to-atmosphere differential pressure limit is not exceeded when the signal representative of aircraft status indicates the aircraft is the in-flight status, and
(ii) the non-flight maximum cabin-to-atmosphere differential pressure limit is not exceeded when the signal representative of aircraft status indicates the aircraft is the non-flight status.
